(19) Europäisches Patentamt
European Patent Office
Office européen des brevets

(11) **EP 4 158 434 B1**

(12) **EUROPEAN PATENT SPECIFICATION**

(45) Date of publication and mention
of the grant of the patent:
**20.11.2024 Bulletin 2024/47**

(21) Application number: **21754746.2**

(22) Date of filing: **26.07.2021**

(51) International Patent Classification (IPC):
$G05B\ 23/02^{(2006.01)}$     $B01D\ 35/02^{(2006.01)}$
$F02M\ 21/00^{(2006.01)}$

(52) Cooperative Patent Classification (CPC):
**G05B 23/0235; G05B 23/0262; G05B 23/027**

(86) International application number:
**PCT/EP2021/070823**

(87) International publication number:
**WO 2022/023247 (03.02.2022 Gazette 2022/05)**

(54) **CONTINUOUS FLOW ENGINE SELF OPTIMIZING CONTROL METHOD AND SYSTEM**

VERFAHREN UND SYSTEM ZUR SELBSTOPTIMIERUNG EINES MOTORS MIT KONTINUIERLICHEM DURCHFLUSS

PROCÉDÉ ET SYSTÈME À COMMANDE DE MOTEUR À ÉCOULEMENT CONTINU À OPTIMISATION AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2020 EP 20188572**

(43) Date of publication of application:
**05.04.2023 Bulletin 2023/14**

(73) Proprietor: **Siemens Energy Global GmbH & Co.
KG
81739 München (DE)**

(72) Inventor: **WIESNER, Thomas
97654 Bastheim (DE)**

(74) Representative: **Isarpatent
Patent- und Rechtsanwälte Barth
Charles Hassa Peckmann & Partner mbB
Friedrichstrasse 31
80801 München (DE)**

(56) References cited:
US-A1- 2014 055 274     US-A1- 2017 160 734
US-A1- 2018 313 721     US-A1- 2020 066 061

**Description**

The present invention refers to a method of monitoring a continuous flow engine providing an automatic adaption of the evaluation parameters. Furthermore, the present invention refers to a system to enable such method. Additionally, the present invention refers to a computer program product adapted to perform such method. Furthermore, the present invention refers to a use of the inventive method, system or computer program product.

US 2014/055274 A relates to a change detection system using frequency analysis.

US 2018/313721 A1 relates to a system and method for monitoring a turbo machine with indicator merging for the synthesis of an alarm confirmation.

Continuous flow engines are well established devices utilized in the industry. Examples are compressors as utilized, for example, in large-scale industrial production processes like refineries or turbines like gas turbines or steam turbines utilized in the energy production. Corresponding devices in provided the significant increase in utilization the past. Being some experimental possibility many decades ago to the highly reliable and long-lasting device quite difficult to impossible to replace now. While the generic type of engine is available since long time these units are still subject to further developments. Especially, the change from past utilization and monitoring as well as maintenance concepts to modern highly advanced and sophisticated concepts requires a significant change in acquiring and utilizing data in this context. However, new possibilities to monitor and control corresponding continuous flow engines result in additional challenges. In this context, it was noted that at least partially operators are confronted with the challenge to tackle that a huge amount of data is provided being to be monitored manually, while support from automatic systems based on established parameters and their limits can only solve this problem partially. Especially, modern continuous flow engines providing a significantly higher number of parameters being determined in a significantly higher degree and requiring an automatic limit based monitoring system provides the challenge to either select broad ranges and limits easily ignoring first indications of problems or narrower ranges and limits resulting in a significant number of false alarms. In this context, it was noted that even finding an ideal limit for a given time does not mean that corresponding limit are suitable for the future. Besides the challenge to continuously improve corresponding continuous flow engines and the services and tools this represents a further challenge. To provide a defined system being able to identify problems in early-stage while still significantly reducing the number of false alarms over long term.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to further aspect the present invention refers to a method of monitoring an industrial plant containing at least one continuous flow engine,
wherein the method contains the steps of

- acquiring a measurement value from at least one sensor,
- evaluating the measurement value whether it falls within a threshold value range,
- in case the measurement value falls outside the threshold value range triggering an alarm action, wherein the alarm action contains sending an evaluation request to an operator,
- receiving an evaluation data from the operator, wherein said evaluation data is based on at least three options, wherein the options include

   i. evaluating the alarm action being false; wherein such evaluation data triggers an increase of the threshold value range,
   ii. evaluating the alarm action being correct,
   iii. evaluating the alarm action being possibly correct, wherein such evaluation data triggers adding to a counter, wherein in case the counter reaches a counter limit a raising of the threshold value range is triggered.

This is especially important for continuous flow engines, as it was noted that corresponding engines provide the high reliability and can be utilized over decades. However, these engines suffer from their use providing a constant change of the engine itself, spontaneous changes based on maintenance and upgrade processes, and the like making them on the one hand highly reliable and durable, however, simultaneously continually deviating from the original state requiring adaptions of such monitoring. Utilizing the inventive methods allows to provide such adaptive system significantly improving the possibilities to monitor and control such continuous flow engine. Typically, it is preferred that the at least one sensor monitors the continuous flow engine or the supporting structure connected to the continuous flow engine. For example, such supporting structure can be the fuel supply of a gas turbine, the boiler of a steam turbine or a device utilizing compressed gas provided by a compressor. Although, the overall design of industrial plants utilizing such continuous flow engines also provides a very continuous and predictable process the characteristics of the continuous flow engines being not only most suited for such method, but also benefitting most from it is naturally especially distinct for the continuous flow engines itself as well as directly interrelated support structures like the connected devices enabling the continuous flow engine to function.

The term "operator" as used herein refers to someone being tasked with especially monitoring or controlling the continuous flow engine. Typically, it is preferred that such operators is locally at the site of the continuous flow engine. Herein, this person can also temporarily be at this location, for example, during some checkup or maintenance. However, such operator can also be located remotely, wherein such operator can be stationed essentially on the other side of the world closely monitoring the status of the parties flow engine from afar.

The term "alarm action" as used herein refers to a signal indicating some irregular state requiring attention or even immediate action. For example, it can be some alarm indicating that the engine should be turned off as soon as possible to repair something. For example, it can be a warning requesting attention to keep the utilization of the continuous flow engine within certain limits to avoid damages or prevent an earlier scheduling of maintenance tasks.

According to another aspect the present invention refers to a system adapted to be utilized in an inventive method comprising a processor and a non-transitory computer readable medium comprising computer executable instructions that when executed by the processor cause the system to perform operations comprising:

- acquiring a measurement value from at least one sensor,
- evaluating the measurement value whether it falls within a threshold value range,
- in case the measurement value falls outside the threshold value range triggering an alarm action, wherein the alarm action contains sending an evaluation request to an operator,
- receiving an evaluation data from the operator, wherein said evaluation data is based on at least three options, wherein the options include

  i. evaluating the alarm action being false; wherein such evaluation data triggers an increase of the threshold value range,
  ii. evaluating the alarm action being correct,
  iii. evaluating the alarm action being possibly correct, wherein such evaluation data triggers adding to a counter, wherein in case the counter reaches a counter limit a raising of the threshold value range is triggered.

According to another aspect the present invention refers to a computer program product, tangibly embodied in a machine-readable storage medium, including instructions operable to cause a computing entity to execute an inventive method.

According to another aspect the present invention refers to a storage device for providing an inventive computer program product, wherein the device stores the computer program product and/or provides the computer program product for further use.

According to another aspect the present invention refers to a use of an inventive method, an inventive system, or an inventive computer program product to provide data indicating the benefit of servicing and/or placing the filter in the continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.

  Fig. 1 shows a scheme of an industrial plant containing a continuous flow engine being adapted to utilize the inventive method.

  Fig. 2 shows a scheme of the inventive method.

Preferably, the embodiments hereafter contains, unless specified otherwise, at least one processor and/or data storage unit to implement the inventive method.

According to one aspect the present invention refers to a method as specified above.

For typical applications it is beneficial that the inventive method also contains possibility to automatically decrease the counter volume. According to further embodiments it is preferred that in case the evaluation data is based on option ii., wherein such evaluation data decreases the counter, wherein the minimum counter value is zero. Typically, it is preferred that the counter is reset. It was noted that utilizing such feedback given by an expert can be beneficially utilized to optimize the automatic system continuously adapting the monitoring to the long-term development.

Typically, it is also beneficial to include a counter limit being at least multiple times the maximum number being added to such counter value. According to further embodiments it is preferred that the counter limit is at least three times, more preferred at least four times, even more preferred at least seven times, the maximum amount added to the counter value in case the alarm action is based on option iii. A corresponding limit below such number was noted to be typically less beneficial for many applications. Especially, such automatic system as described herein continuously monitoring the state provides a significant number of false alarms being easily filtered out by such counter limit.

An option to adapt the threshold value range being beneficial for many typical applications is based on a combination of relative and absolute value. According to further embodiments it is preferred that the adjustment of the threshold value range is calculated according to formula (I)

$$T_{new} = (A_1 \cdot T \cdot (1+x_1)) + (A_2 \cdot (T+x_2)) \quad (I),$$

wherein $T_{new}$ = adjusted threshold value range,
T = threshold value range,
$A_1$ = relative factor,
$A_2$ = absolute factor,
$x_1$ is a specified increase factor,
$X_2$ is a specified increase value,
wherein $A_1 + A_2 = 1$. Herein, one of the specified increase factors and the specified increase value can be selected to be zero limiting the change to a relative or absolute change. For example, it can be preferred to provide a simplified system only providing a relative or absolute adaption in general. However, while the system can provide the possibility to completely disable such dual adaption by excluding the relative or absolute adaption it is preferred that the method makes use of the possibilities provided herewith. Also, such adaption can be beneficially utilized to switched from a relative driven adaption to an adaption essentially based on an absolute factor by decreasing $A_2$. For example, the relative adaption can be utilized during the first stages of using a new delivered continuous flow engine and switching to a change more or completely based on an absolute increase when the introduction phase is completed. Such method can also be utilized after maintenance steps or especially upgrades introduced.

It was noted that such apparently simply method allows to provide a possibility to easily tailor the available system according to the specific needs. It becomes possible to enable an application to the plurality of data sources available with such generic system and simply adapt $x_1$ and $x_2$ according to the characteristics of the specific feature monitored. Significantly simplifying the overall system and, for example, allowing to easily introduce improvements or adaptions required based on, for example, upgrades into a whole fleet of continuous flow engines with very little effort.

Typically, it is further preferred to include an upper limit of the change. According to further embodiments $T_{new}$ - T is at most B, wherein B is an adaption limit. Such feature allows to narrow the possible amendments of the change of the threshold value range to a certain limit to avoid that, for example, due to neglecting reviewing the development for a longer period a significant change becomes possible not be originally intended. Surprisingly, it was noted that while reviewing log files and the like that chance of such topic occurring represents a realistic problem for continuous flow engine based on the interactions observed for different features and options providing comparable monitoring.

Surprisingly, it was noted that the adjustment of the threshold value range can be specified by the formula for many occasions. According to further embodiments it is preferred that the adjustment of the threshold value range is calculated according to formula (II)

$$A = (M - L) \cdot y \quad (II),$$

wherein A = adjustment value,
M = measurement value,
L = limit value of the threshold value range,
y is a predefined adaption factor,
wherein the threshold value range is increased by A. For typical applications such system providing an automatic adaption of the threshold value range is a significant benefit. Such system can be typically especially usefully utilized to train some separate system typically being detached from a distributed system providing a continuous improvement of the threshold value ranges. However, such system can also be beneficially utilized with some connected system receiving data from a distributed system, wherein, for example, such local automatic direct adjustment is utilized in the first step to quickly respond to a current situation while generic adaption based on that the of such distributed system takes place on a regular basis.

Herein, certain adapting factors are typically efficient for many applications. According to further embodiments it is preferred that the predefined adaption factor is selected from the range from 0.01 to 0.1, more preferred from 0.2 to 0.08, even more preferred from 0.03 to 0.07. It was noted that such predefined adaption factor being selected from such range is typically beneficial for continuous flow engines like gas turbines and steam turbines. Herein, such adaption factor can be, for example, utilized as generic starting point based on the broader applicability to such systems, wherein this adaption factor is subject to further optimization based on the specific system.

That action according to the above referenced formula or different automatic adaptions introduced can be beneficially connected to the feedback loop. According to further embodiments it is preferred that the method contains an adaption of the threshold value range provided automatically, wherein the adaption of the threshold value range is forwarded to an operator for reviewing. Herein, it is typically preferred that the operator has to agree to said amendment for this implemented. However, it is also possible to provide system implementing such amendment first and requesting verification of such amendment operator hereafter. Such system is typically preferable for highly relevant parameters and components to combine the automatic suggestion with them annual evaluation. It was noted that such arrangement significantly cuts down the time required for such operator while making best use of the experience collected over long time by such person.

Furthermore, it was noted that the number of adaptions over a certain time period is also very beneficial parameter to be considered. According to further embodiments the number of adaptions over a time period are stored in a database. Typically, it is preferred that further alarm is triggered, in case the number of adaptions over the specified time period exceeds an adaption number limit. It was noted that the system provides a statistical number of adaptions typically occurring over time. Surprisingly, reviewing whether the number of adaptions required significantly exceeds the statistically expected volume provide a valuable insight whether the machine deviates from the normal behavior. Such information and alarm is especially useful, as not everything has to be a reviewed by a single operator keeping everything in mind, but even different operators switching shifts and being responsible for a plurality of continuous flow engines are able to detect an abnormal behavior in a very early stage.

It was further noted that the inventive method is especially well-suited to be applied for specific engines. According to further embodiments it is preferred that the continuous flow engine is a gas turbine, a steam turbine or a compressor, more preferred a gas turbine, even more preferred a gas turbine containing a compressor unit. It was noted that the inventive method can be especially useful to monitor and control such continuous flow engine. For typical applications it is especially useful to utilize further embodiments as described herein for such continuous flow engines. For example, the big amount of data available for such engines and experience collected at the manufacturer side allows to provide highly sophisticated simulations models and big amount of historic data that can be utilized as described herein.

According to further embodiments it is preferred that the measurement value is a measurement value of a compressor part of the continuous flow engine. For example, such compressor part can be the compressor itself being a continuous flow engine or a compressor part in front of a turbine part of a gas turbine.

The evaluation of the measurement only you can be furthermore supported by providing simulation data. According to further embodiments it is preferred that a simulated value is provided to the operator along the measurement value, wherein the simulated value is based on a model of the continuous flow engine or a model of a part of the continuous flow engine. Although, the operator being an expert for such continuous flow engine is able to evaluate such data based on his/her experience it was noted that providing such simulated value provides a significant benefit to evaluate, for example, unusual situations or during shift changes until the operator gained inside in the recent utilization and behavior of the continuous flow engine. The benefit surprisingly outruns the additional effort resulting from providing such simulations.

However, it was noted that also historical data can be beneficially utilized according to the present invention. According to further embodiments it is preferred that a historical value is provided to the operator along the measurement value, wherein the historical value is retrieved from a historical database based on the current state of the continuous flow engine. Utilizing such historic values is typically beneficial in case a sufficient amount of historic data is available. The processing power required to identify comparable situations based on a historic database containing historic values of the available continuous flow engine is typically far below the processing power required for simulating such values. However, to increase the amount of available data it can be preferred to utilize data collected for a comparable continuous flow engine being stored locally or in a distributed database. This typically requires to automatically assess whether the available data is transferable and suitable to be utilized. Although, such automatically evaluation significantly increases the required processing power the possibility to rely on a significantly bigger amount of available data renders such method very beneficial for typical applications. An example of historic data that might be forwarded includes a number of potential correct alarms in a specified time period and a number of verified alarms in such time period.

A further improvement to be implemented according to the present method can be a communication with a remote database. According to further embodiments it is preferred that the method contains the step of sending a dataset to a remote database like a distributed database, wherein the dataset contains data containing the threshold value range and/or the data relating to the evaluation data. Utilizing such distributed database is especially useful. This allows to make best use of the advanced expertise at a central location and especially at a third party like the manufacturer of such continuous flow engine. Herein, a significantly increased speed of identifying problems and possibilities to improve the existing system as well as the quality of corresponding checks can be provided.

A further feature that can be beneficially introduced in the inventive method is introducing a smart contract. According to further embodiments it is preferred that the remote database, preferably the distributed database, contains a smart contract being triggered in case the threshold value range falls outside of a specified range and/or the evaluations of the operator differ from the reference data regarding evaluations of the operator. The term "smart contract" as used herein especially includes data like program data or data being able to be executed by a program to perform specified steps or actions including control commands, specified values, requirements, interrelated data like measured values and corresponding action in response to fulfilling or not fulfilling predefined values in comparison to said measured values. For example, executing the smart contract can be done by a correspondingly selected distributed database or a runtime environment like a virtual machine. Preferably, such means for executing the smart contract are turning complete. Typically, it is preferred that the smart contract is executed using the infrastructure of a distributed database. Such smart contract can be, for example, beneficially utilized to automatically trigger maintenance actions or payment models utilizing a more interactive and adapted system in real time. Herein, for example, the payment for maintenance can be automatically adapted based on the use of the continuous flow engine to provide the owner of the continuous flow engine as much freedom of operation as possible. Simultaneously, the maintenance provider is able to provide a reasonable calculation based on the increase of security beyond a level originally agreed upon requiring increased service costs that can be billed.

While the present invention can also be utilized for very old continuous flow engines with little insight in the corresponding process it is typically preferred to assess multiple measurement values for this method. According to further embodiments it is preferred that the method contains acquiring at least three, more preferred at least four, even more preferred at seven measurement values, for evaluation, wherein the measurement values are measurement values of a compressor part of the continuous flow engine. While it is possible to utilize a single measurement value to monitor and control such device it was noted that a combination of multiple measurement values for evaluation is beneficial for typical applications. Resulting in a surprisingly improved insight allowing to countercheck the multiple measurement values. Comparing multiple measurement values originating from, for example, different sensors allows to identify problems with a significantly higher security.

Herein, it is surprisingly beneficial to combine data of different kinds of data sources. According to further embodiments it is preferred that the method utilizes at least two, even more preferred at least three, different measurement values of the continuous flow engine. Utilizing such different measurement values of the same continuous flow engine allows to monitor different parts of the continuous flow engine, wherein problems resulting in deviations from the expected behavior are typically reflected in changes of multiple measurement values. Coupling multiple measurements that should all show a deviation in such situation allows to significantly decrease the rate of false positive detections. According to further embodiments it is preferred that the measurement values are based on sensor data of different sensors. Typically, it is preferred that the different sensors are based on different measurement methods. For example, such sensors can be based on pressure measurements, rotation speed measurements, density measurement, temperature measurements and the like.

According to a further aspect the present invention refers to a system adapted to be utilized in an inventive method comprising a processor and a non-transitory computer readable medium comprising computer executable instructions that when executed by the processor cause the system to perform operations comprising:

- acquiring a measurement value from at least one sensor,
- evaluating the measurement value whether it falls within a threshold value range,
- in case the measurement value falls outside the threshold value range triggering an alarm action, wherein the alarm action contains sending an evaluation request to an operator,
- receiving an evaluation data from the operator, wherein said evaluation data is based on at least three options, wherein the options include

  i. evaluating the alarm action being false; wherein such evaluation data triggers an increase of the threshold value range,
  ii. evaluating the alarm action being correct,
  iii. evaluating the alarm action being possibly correct, wherein such evaluation data triggers adding to a counter, wherein in case the counter reaches a counter limit a raising of the threshold value range is triggered.

According to further aspect the present invention refers to a upgrade kit containing at least the inventive system. Such upgrade kit is especially useful to upgrade existing industrial plants and continuous flow engines. Surprisingly, it was noted that the inventive system can be adapted to automatically establish corresponding connections as well as retrieve data what data is available in the data infrastructure of such industrial plant. In case the corresponding rights are granted it is further possible to automatically retrieve updates from remote databases provided, for example, by the manufacturer of the continuous flow engines or the like to also improve the first settings of the system based on the specific local requirements and eventualities.

Typically, it is preferred that such upgrade kit is adapted to automatically communicate with field personal tasked with implementing such upgrade. Surprisingly, it is possible to automatically provide, for example, field personal with a list of deficiencies with regard to the sensor data, connection problems, or the like forwarding clear instructions what is required to optimize the benefit of the upgrade kit.

In most cases it is preferred that such upgrade kit furthermore contains a historic database and simulation unit specifically adapted to execute the inventive method without requiring further processing power of the local industrial plant. While it is expected that future and state-of-the-art industrial plants utilizing a continuous flow engine provide corresponding databases and processes enabling simply re-assigning corresponding processing power and data storage, it was noted that introducing such thing into an upgrade kit provides a significant benefit to provide such possibility to the majority of existing industrial plants.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a use of an inventive method, an inventive system, an inventive upgrade kit or an inventive computer program product to upgrade an industrial plant containing at least one continuous flow engine.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

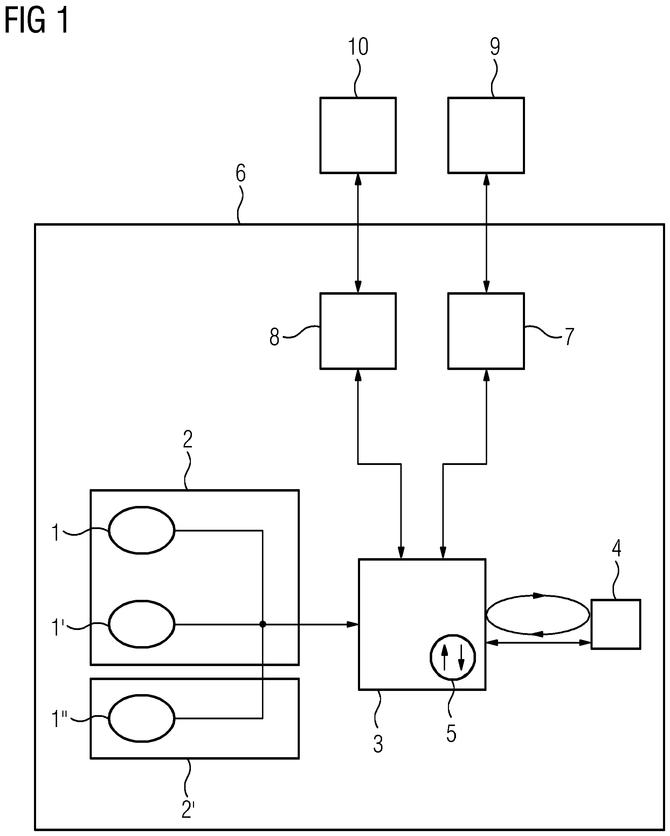

Figure 1 shows a scheme of an industrial plant containing a continuous flow engine 2, 2' being a gas turbine providing a compressor part in the turbine part being adapted to utilize the inventive method. Herein, the exemplarily shown sensors 1, 1', 1" are located in the compressor part of the two continuous flow engines 2, 2' being located in an industrial plant 6. it is pointed out that the corresponding continuous flow engines 2, 2' contain a significantly higher number of sensors not shown in figure 1 and being utilized to provide measurement values analyzed according to inventive method. The data acquired by the sensors 1, 1', 1" are sent to an inventive system 3 processing the data according to the inventive method. Herein, the system 3 is adapted to adapt a counter 5 managed by the system 3 based on the evaluations of the alarms generated. Herein, the measured values are evaluated based on a specified threshold value range to eventually trigger an alarm in case the measurement value falls outside the threshold value range. In case such alarm action is triggered an evaluation request is sent to an operator requesting to evaluate the alarm based on at least three options. These options are provided to the operator as choices the operator can select from. Herein, the data provided to the operator also contains historic data and simulation data to support his decision. Corresponding data is acquired from an historic database 8 and simulation unit 7 being locally available at the site of the industrial plant 6. The historic database 8 and simulation unit 7 are furthermore connected to remote databases. The historic database 8 is adapted to exchange information with the historic remote database 10 to retrieve additional data to be utilized during the evaluation. Such features is especially beneficial to provide a basic amount of historic data to be utilized after upgrades or modifications of the existing continuous flow engine 2, 2' rendering the available historic data partially unusable. The communication between the historic database 8 and the historic remote database 10 is triggered on demand.

The simulation unit 7 and simulation remote database 9 are exchanging data on the regular basis or triggered by the simulation remote database 9. For example, in case certain upgrades of existing models utilized in the simulation unit 7 are available, for example, reducing the processing power required or increasing the simulation efficiency or reliability. In such case corresponding data is sent to the simulation unit 7 to improve its performance. However, in case deficiencies are already noted by the simulation unit 7 itself a request to the simulation remote database 9 can also be directly triggered on this side.

In case the operator evaluates the alarm action being false the threshold value range is increased to compensate for an threshold value range apparently not fitting anymore. In case the alarm action is evaluated being correct the counter is decreased by a specific amount, wherein the counter value does not fall below zero. In case the alarm action is considered being potentially correct as specified amount is added to the counter raising the counter value until a counter limit is reached. In case the counter limit is reached a raising of the threshold value range is triggered. Especially, utilizing the know-how of a third party like a continuous flow engine manufacturer and/or company specialized in servicing such continuous flow engines provides a significant benefit. The deep inside and extensive expertise collected over decades can be utilized to specifically tailor and optimize corresponding models of continuous flow engine utilized for such simulation.

Herein, the operator might also provide an evaluation containing a data set being sent from the interface 4 to the system 3 to reset the counter. The system 3 shown also provides the possibility to manually request that in case an evaluation based on option ii. is provided the counter is reset automatically. This is surprisingly beneficial to specifically tailor a generic system 3 to the specific needs of the corresponding continuous flow engine.

In case the counter limit is reached the adaption of the threshold value range is calculated according to the following formula (II):

$$A = (M - L) \cdot y \quad (II),$$

wherein A = adjustment value,

M = measurement value,

L = limit value of the threshold value range, y is a predefined adaption factor,

wherein the threshold value range is increased by A at the corresponding limit the measurement value exceeds the measurement value. It has to be understood that such increase of the threshold value range can also equal a decrease of the corresponding limit of the threshold value range in case the limit is the lower limit and the measurement value is lower that said value. In this case the term (M-L) becomes negative and is to be added to the corresponding end of threshold value range resulting in an overall increase of the threshold value range. Herein, the operator assigns specifically adaption factors to each characteristic being measured on a case-by-case basis, wherein the suggested adaption factor lies within the range of 0.2 to 0.08 for the system as shown. For the first implementation a higher adaption factor is selected to provide the faster first adaption to the current system. After establishing a working system, the adaption factor is reduced to take into account that further adaptions required should be significantly lower. In case the significant number of adaptions was later on required this can indicate further problems of the continuous flow engines triggering a different kind of evaluation and consideration.

For typical applications such system providing an automatic adaption of the threshold value range is a significant benefit. For example, such system can be utilized to adapt some isolated system typically being detached from a distributed system providing a continuous improvement of the threshold value ranges. However, such system can also be beneficially utilized with some connected system receiving data from a distributed system, wherein, for example, such local automatic direct adjustment is utilized in a first step to quickly respond to a current situation while generic adaption based on data of such distributed system takes place on a regular basis.

The data acquired during the inventive method and the currently utilized threshold value range is furthermore not simply stored locally. The corresponding data is also forwarded to two remote databases not shown in the figure and stored there. One database belongs to the owner of the industrial plant 6 keeping him informed and keeping track of the state of the continuous flow engines utilized during. The second database belongs to the maintenance provider being tasked with doing maintenance and scheduling it accordingly. Herein, the service is provided on the flexible basis, wherein the corresponding required action is delivered on demand. The corresponding data forwarded not only allows to do some internal evaluation whether maintenance is required, but also allows to quantify the benefit of doing earlier or later maintenance to provide evidence to the owner whether the corresponding maintenance action was justified or not.

System 3 as shown in figure 1 was included as upgrade in the industrial plant 6. Herein, a final solution was provided to the owner of the industrial plant 6. The upgrade kit containing the system 3 as well as the historic database 8 and the simulation unit 7 has been connected to the existing data infrastructure of the industrial plant 6. System 3 was configured to automatically scan for relevant measurement values provided for the continuous flow engines 2, 2' being available in the data infrastructure. Based on this evaluation the field personal is requested to install corresponding upgrade. For example, they are requested to install further sensors 1, 1', 1" in the continuous flow engines 2, 2' and provide certain connections in the data infrastructure. After connecting to the historic remote database turn in the simulation remote database 9 via internet corresponding updates are automatically loaded and installed in the system. Furthermore, the feedback loop with the user interface 4 was tested and established.

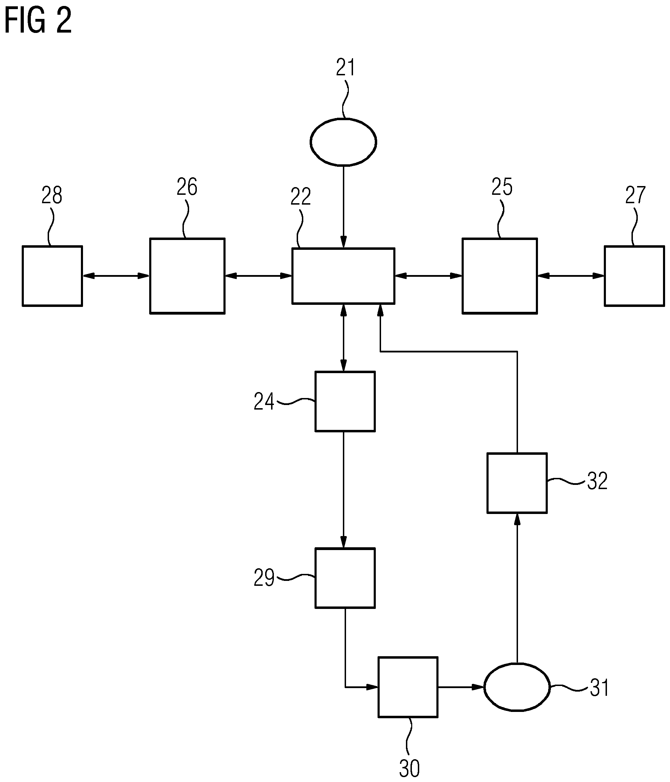

Figure 2 shows a scheme of the inventive method. Herein, the sensor data 21 is forwarded to execute a step 22 containing evaluating the sensor data utilizing the inventive system. In case an evaluation by an operator is to be requested step 25 being the retrieval of historic data is performed. In case it was noted that the available historic data is not sufficient additional step 27 is executed including the retrieval of historic data from a remote database. Furthermore, step 26 is performed containing a retrieval of simulation data from the simulation unit 7. In case it is noted that the models are not sufficient to provide a reasonable simulation the optional step 28 including retrieving simulation data from a remote database is performed.

The corresponding data is forwarded a user interface enabling an operator to review the corresponding alarm action during step 24. In case the alarm action is considered to be potentially correct step 29 executed, wherein the change of the counter value is quantified columns to the specific situation. Hereafter, according to step 30 the counter is adapted accordingly and stored in step 23 and the corresponding database being utilized by the inventive system. In case the corresponding counter value exceeds the threshold value step 32 is triggered including an amendment of the threshold value. Such changes are also stored in a database utilized by the inventive system and taken into account for future evaluations of the measurement values as forwarded by the sensors.

The present invention was only described in further detail for explanatory purposes.

**Claims**

1. Method for monitoring an industrial plant (6) comprising at least one continuous flow engine (2, 2'), wherein the method comprises the steps of:

   - acquiring a measurement value from at least one sensor (1, 1', 1"),
   - determining whether the acquired measurement value is comprised within a threshold value range,
   - in case it is determined that the measurement value is outside the threshold value range, triggering an alarm action, wherein the alarm action comprises sending an evaluation request to an operator, the method **characterised in that** it further comprises the steps of:

       - receiving an evaluation data from the operator, wherein the evaluation data is based on one of:

           determining, by the operator, that the alarm action is false and as a result triggering an increase of the threshold value range, or
           determining, by the operator, the alarm action is correct, or
           determining, by the operator, that the alarm action is possibly correct, and as a result adding to a counter (5), wherein when the counter (5) reaches a counter limit, triggering as a result a raising of the threshold value range.

2. The method according to claim 1, wherein the evaluation data is based on determining, by the operator, that the alarm action is correct, wherein the method comprises as a result decreasing the counter (5), wherein the minimum counter value which can be reached is zero.

3. The method according to any of claims 1 to 2, wherein the adjustment of the threshold value range is calculated according to formula (I)

$$T_{new} = ((T \cdot (1+x_1))+(T+x_2))/2 \quad (I),$$

   wherein $T_{new}$ = adjusted threshold value range,
   P55893-WOEP
   EP 21754746.2
   T = threshold value range,
   $x_1$ is a specified increase factor,
   $X_2$ is a specified increase value.

4. The method according to claim 3, wherein $T_{new}$ - T is at most B, wherein B is an adaptation limit.

5. The method according to any of claims 1 to 4, wherein the measurement value is a measurement value of a compressor part of the continuous flow engine (2, 2').

6. The method according to any of claims 1 to 5, wherein a simulated value is provided to the operator along the measurement value, wherein the simulated value is based on a model of the continuous flow engine (2, 2') or a model of a part of the continuous flow engine.

7. The method according to any of claims 1 to 6, wherein a historical value is provided to the operator along the measurement value, wherein the historical value is retrieved from a historical database based on the current state of the continuous flow engine (2, 2').

8. The method according to any of claims 1 to 7, wherein the continuous flow engine (2, 2') is a gas turbine, a steam turbine or a compressor, more preferred a gas turbine, even more preferred a gas turbine containing a compressor unit.

9. The method according to any of claims 1 to 8, wherein the method further comprises the step of sending a dataset to a distributed database, wherein the dataset comprises data containing the threshold value range and/or the data relating to the evaluation data.

10. The method according to any of claims 1 to 9, further comprising acquiring at least three, more preferred at least four, even more preferred at least seven measurement values, wherein the measurement values are measurement values of a compressor part of the continuous flow engine (2, 2').

11. A system (3) for monitoring an industrial plant (6) comprising at least one continuous flow engine (2, 2'), wherein the system comprises a processor and a non-transitory computer readable medium comprising computer executable instructions that when executed by the processor cause the system (3) to perform the steps of the method according to any one of claims 1 to 10.

12. A computer program product comprising instructions which, when the program is executed by a computer, cause the computer to carry out the steps of the method according to any one of claims 1 to 10.

13. A computer-readable storage medium comprising instructions which, when executed by a computer, cause the computer to carry out the steps of the method according to any one of claims 1 to 10.


**Patentansprüche**

1. Verfahren zur Überwachung einer Industrieanlage (6), die mindestens einen Motor mit kontinuierlichem Durchfluss (2, 2') umfasst, wobei das Verfahren die folgenden Schritte umfasst:

- Erfassen eines Messwerts von mindestens einem Sensor (1, 1', 1"),
- Bestimmen, ob der erfasste Messwert innerhalb eines Schwellenwertbereichs liegt,
- falls bestimmt wird, dass der Messwert außerhalb des Schwellenwertbereichs liegt, Auslösen einer Alarmaktion, wobei die Alarmaktion das Senden einer Bewertungsanforderung an einen Bediener umfasst, wobei das Verfahren **dadurch gekennzeichnet ist, dass** es ferner die folgenden Schritte umfasst:
- Empfangen von Bewertungsdaten von dem Bediener, wobei die Bewertungsdaten auf einem der Folgenden basieren:

Bestimmen, durch den Bediener, dass die Alarmaktion falsch ist, und infolgedessen Auslösen einer Erhöhung des Schwellenwertbereichs, oder
Bestimmen, durch den Bediener, dass die Alarmaktion richtig ist, oder
Bestimmen, durch den Bediener, dass die Alarmaktion möglicherweise richtig ist, und infolgedessen Hinzufügen zu einem Zähler (5), wobei, wenn der Zähler (5) einen Zählergrenzwert erreicht, infolgedessen eine Erhöhung des Schwellenwertbereichs ausgelöst wird.

2. Verfahren nach Anspruch 1, wobei die Auswertungsdaten auf dem Bestimmen durch den Bediener basieren, dass die Alarmaktion richtig ist, wobei das Verfahren infolgedessen das Verringern des Zählers (5) umfasst, wobei der minimale Zählerwert, der erreicht werden kann, Null ist.

3. Verfahren nach einem der Ansprüche 1 bis 2, wobei die Anpassung des Schwellenwertbereichs nach Formel (I) berechnet wird:

$$T_{new} = ((T \cdot (1+x_1)) + (T+x_2))/2 \quad (I),$$

wobei $T_{new}$ = der angepasste Schwellenwertbereich ist,
T = der Schwellenwertbereich ist,
$x_1$ ein festgelegter Erhöhungsfaktor ist,
$x_2$ ein festgelegter Erhöhungswert ist.

4. Verfahren nach Anspruch 3, wobei $T_{new}$ - T höchstens B ist, wobei B eine Anpassungsgrenze ist.

**5.** Verfahren nach einem der Ansprüche 1 bis 4, wobei der Messwert ein Messwert eines Verdichterteils des Motors mit kontinuierlichem Durchfluss (2, 2') ist.

**6.** Verfahren nach einem der Ansprüche 1 bis 5, wobei dem Bediener zusammen mit dem Messwert ein simulierter Wert bereitgestellt wird, wobei der simulierte Wert auf einem Modell des Motors mit kontinuierlichem Durchfluss (2, 2') oder einem Modell eines Teils des Motors mit kontinuierlichem Durchfluss basiert.

**7.** Verfahren nach einem der Ansprüche 1 bis 6, wobei dem Bediener zusammen mit dem Messwert ein historischer Wert bereitgestellt wird, wobei der historische Wert basierend auf dem aktuellen Zustand des Motors mit kontinuierlichem Durchfluss (2, 2') aus einer historischen Datenbank abgerufen wird.

**8.** Verfahren nach einem der Ansprüche 1 bis 7, wobei die Motor mit kontinuierlichem Durchfluss (2, 2') eine Gasturbine, eine Dampfturbine oder ein Verdichter ist, bevorzugter eine Gasturbine, noch bevorzugter eine Gasturbine, die eine Verdichtereinheit enthält.

**9.** Verfahren nach einem der Ansprüche 1 bis 8, wobei das Verfahren ferner den Schritt des Sendens eines Datensatzes an eine verteilte Datenbank umfasst, wobei der Datensatz Daten umfasst, die den Schwellenwertbereich und/oder die Daten in Bezug auf die Bewertungsdaten enthalten.

**10.** Verfahren nach einem der Ansprüche 1 bis 9, ferner umfassend das Erfassen von mindestens drei, bevorzugter mindestens vier, noch bevorzugter mindestens sieben Messwerten, wobei die Messwerte die Messwerte eines Verdichterteils des Motors mit kontinuierlichem Durchfluss (2, 2') sind.

**11.** System (3) zur Überwachung einer Industrieanlage (6), die mindestens einen Motor mit kontinuierlichem Durchfluss (2, 2') umfasst, wobei das System einen Prozessor und ein nichtflüchtiges computerlesbares Medium umfasst, das computerausführbare Anweisungen umfasst, die bei Ausführung durch den Prozessor bewirken, dass das System (3) die Schritte des Verfahrens nach einem der Ansprüche 1 bis 10 durchführt.

**12.** Computerprogramm, umfassend Anweisungen, die bei Ausführung des Programms durch einen Computer bewirken, dass der Computer die Schritte des Verfahrens nach einem der Ansprüche 1 bis 10 durchführt.

**13.** Computerlesbares Speichermedium, umfassend Anweisungen, die bei Ausführung durch einen Computer bewirken, dass der Computer das Verfahren nach einem der Ansprüche 1 bis 10 durchführt.

**Revendications**

**1.** Procédé de surveillance d'une installation industrielle (6) comprenant au moins un moteur à flux continu (2, 2'), le procédé comprenant les étapes suivantes :

- acquérir une valeur de mesure à partir d'au moins un capteur (1, 1', 1"),
- déterminer si la valeur de mesure acquise est comprise dans une plage de valeurs seuils,
- dans le cas où il est déterminé que la valeur de mesure se situe en dehors de la plage de valeurs seuils, déclencher une action d'alarme, l'action d'alarme comprenant d'envoyer une demande d'évaluation à un opérateur, le procédé étant **caractérisé par le fait qu'**il comprend en outre l'étape suivante :
- recevoir des données d'évaluation de la part de l'opérateur, les données d'évaluation étant basées sur l'une des déterminations suivantes :

déterminer, par l'opérateur, que l'action d'alarme est fausse et, en conséquence, déclencher une augmentation de la plage de valeurs seuils, ou
déterminer, par l'opérateur, que l'action d'alarme est correcte, ou
déterminer, par l'opérateur, que l'action d'alarme est peut-être correcte et, en conséquence, incrémenter un compteur (5), où, lorsque le compteur (5) atteint une limite, déclencher en conséquence une augmentation de la plage de valeurs seuils.

**2.** Procédé selon la revendication 1, dans lequel les données d'évaluation sont basées sur la détermination, par l'opérateur, que l'action d'alarme est correcte, le procédé comprenant en conséquence de décrémenter le compteur (5), la valeur minimale du compteur pouvant être atteinte étant zéro.

**3.** Procédé selon l'une quelconque des revendications 1 et 2, dans lequel l'ajustement de la plage de valeurs seuils est calculé selon la formule (I)

$$T_{new} = ((T \cdot (1+x_1)) + (T+x_2))/2 \ (I),$$

où $T_{new}$ = plage de valeurs seuils ajustée,
T = plage de valeurs seuils,
$x_1$ est un facteur d'augmentation spécifié,
$x_2$ est une valeur d'augmentation spécifiée.

**4.** Procédé selon la revendication 3, dans lequel $T_{new}$ - T est au plus égal à B, B étant une limite d'adaptation.

**5.** Procédé selon l'une quelconque des revendications 1 à 4, dans lequel la valeur de mesure est une valeur de mesure d'une partie de compresseur du moteur à flux continu (2, 2').

**6.** Procédé selon l'une quelconque des revendications 1 à 5, dans lequel une valeur simulée est fournie à l'opérateur avec la valeur de mesure, la valeur simulée étant basée sur un modèle du moteur à flux continu (2, 2') ou d'un modèle d'une partie du moteur à flux continu.

**7.** Procédé selon l'une quelconque des revendications 1 à 6, dans lequel une valeur historique est fournie à l'opérateur avec la valeur de mesure, où la valeur historique est récupérée à partir d'une base de données historique sur la base de l'état courant du moteur à flux continu (2, 2').

**8.** Procédé selon l'une quelconque des revendications 1 à 7, dans lequel le moteur à flux continu (2, 2') est une turbine à gaz, une turbine à vapeur ou un compresseur, plus préférablement une turbine à gaz, encore plus préférablement une turbine à gaz contenant une unité de compression.

**9.** Procédé selon l'une quelconque des revendications 1 à 8, dans lequel le procédé comprend en outre l'étape comprenant d'envoyer un ensemble de données à une base de données distribuée, l'ensemble de données comprenant des données contenant la plage de valeurs seuils et/ou les données relatives aux données d'évaluation.

**10.** Procédé selon l'une quelconque des revendications 1 à 9, comprenant en outre l'acquisition d'au moins trois, de manière préférable d'au moins quatre, de manière encore plus préférable d'au moins sept valeurs de mesure, où les valeurs de mesure sont des valeurs de mesure d'une partie compresseur du moteur à flux continu (2, 2').

**11.** Système (3) de surveillance d'une installation industrielle (6) comprenant au moins un moteur à flux continu (2, 2'), dans lequel le système comprend un processeur et un support non transitoire lisible par ordinateur comprenant des instructions exécutables par ordinateur qui, lorsqu'elles sont exécutées par le processeur, amènent le système (3) à exécuter les étapes du procédé selon l'une quelconque des revendications 1 à 10.

**12.** Produit programme informatique comprenant des instructions qui, lorsque le programme est exécuté par un ordinateur, amènent l'ordinateur à exécuter les étapes du procédé selon l'une quelconque des revendications 1 à 10.

**13.** Support de stockage lisible par ordinateur comprenant des instructions qui, lorsqu'elles sont exécutées par un ordinateur, amènent l'ordinateur à exécuter les étapes du procédé selon l'une quelconque des revendications 1 à 10.

FIG 1

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014055274 A
- US 2018313721 A1